Europäisches Patentamt

European Patent Office

Office européen des brevets

(19)

(11) Veröffentlichungsnummer: **0 042 515 B1**

(12) **EUROPÄISCHE PATENTSCHRIFT**

(45) Veröffentlichungstag der Patentschrift:
21.09.83

(51) Int. Cl.³: **C 09 D 11/10**

(21) Anmeldenummer: 81104281.1

(22) Anmeldetag: **03.06.81**

(54) **Papier-Druckfarbe und deren Verwendung.**

(30) Priorität: **20.06.80 DE 3023118**

(43) Veröffentlichungstag der Anmeldung:
**30.12.81 Patentblatt 81/52**

(45) Bekanntmachung des Hinweises auf die Patenterteilung:
**21.09.83 Patentblatt 83/38**

(84) Benannte Vertragsstaaten:
**AT BE CH FR GB IT LI NL SE**

(56) Entgegenhaltungen:
**DE-A-1 026 459**
**US-A-2 299 547**
**US-A-3 374 194**

(73) Patentinhaber: **MICHAEL HUBER MÜNCHEN GMBH,**
**Feldkirchener Strasse 15,**
**D-8011 Kirchheim-Heimstetten (DE)**

(72) Erfinder: **Uhlemayr, Albert, Schulstrasse 39,**
**D-8092 Haag / Obb. (DE)**
Erfinder: **Traitteur, Heinrich, Dr., Elektrastrasse 7b,**
**D-8000 München 81 (DE)**

(74) Vertreter: **Berg, Wilhelm, Dr. et al, Dr. Berg, Dipl.-Ing.**
**Stapf, Dipl.-Ing. Schwabe, Dr. Dr. Sandmair**
**Mauerkircherstrasse 45, D-8000 München 80 (DE)**

## Papier-Druckfarbe und deren Verwendung

Die Erfindung betrifft eine Druckfarbe zum Bedrucken von Papier für graphische Zwecke bestehend aus Pigment, einem mit langkettigen Fettsäuren modifiziertem Alkydharz-Bindemittel und gegebenenfalls weiteren üblichen Bestandteilen, wie Gleitmittel, Lösungsmittel und einem Viskositäts-beeinflussenden Mittel. Weiter betrifft die Erfindung die Verwendung dieser Druckfarben.

An moderne Druckfarben zum Bedrucken von Papier werden je nach Anwendungszweck eine Vielzahl, zum Teil widersprüchlich erscheinende Anforderungen gestellt.

So sollten die Papier-Druckfarben, beispielsweise für Faltschachteln, eine möglichst hohe Scheuerfestigkeit aufweisen. Andererseits sollen diese Druckfarben beispielsweise für Zeitungen, Massendrucksachen und dgl. eine möglichst gute Wiederablösbarkeit besitzen. Hierdurch soll eine möglichst hohe Recyclingfähigkeit bei der Altpapieraufarbeitung ermöglicht werden.

Eine weitere Forderung an die Druckfarben, überall dort wo sie zur Herstellung von Verpackungen für Lebensmittel, Genussmittel, Kosmetika und dgl. verwendet werden, wie z.B. Schokoladeneinwickler, ist äusserste Geruchs- und Geschmacksneutralität. Im Bereich des Etikettendruck ist es namentlich wo es um Aufkleber für Mehrwegflaschen geht, erforderlich, dass die bedruckten Etiketten eine hohe Laugendurchdringungsgeschwindigkeit aufweisen, damit die Reinigungslauge den flächigen Druckfarbenfilm des Etiketts schnell durchdringen und leicht ablösen kann. Auch in herstellungstechnischer Hinsicht müssen die Druckfarben und deren Bestandteile eine Reihe von Forderungen erfüllen. So ist für eine gute Pigmentbenetzung Sorge zu tragen, sei es durch Auswahl entsprechender Bindemittelzusammensetzungen, durch spezielle Zusätze oder durch Pigmentvorbehandlung; dabei soll diese Pigmentbenetzungsfähigkeit nicht zu Lasten der Beanspruchbarkeit des Drucks gehen. Weiter ist die Zusammensetzung einer Druckfarbe danach auszurichten, dass sie ein möglichst hohes Pigmentaufnahmevermögen, ohne nachteilige Beeinträchtigung der Haftfestigkeit des Drucks aufweist.

Diese komplexen anwendungstechnischen und herstellungstechnischen Forderungen sind die Ursachen für die zahlreichen, in der Literatur und der Praxis bekanntgewordenen Versuche, einen akzeptablen Kompromiss zu finden (GB-A 699 513, US-A 3 481 891 und 3 786 008).

Die gängigen Druckfarben für Papier enthalten neben Pigmenten im wesentlichen Bindemittel und die Verarbeitbarkeit unterstützende Zusätze. Die Bindemittel umfassen regelmässig ein Harzgemisch aus trocknenden Alkydharzen, z.B. pflanzlichen Ölen, wie Leinöl, Sojaöl, Tungöl, einschliesslich Trockenstoffen wie Kobalt-Naphthenat und Mangan-Octoat, sowie Hartharzen vom Typ Phenol-modifizierter Kolophoniumderivate, Kohlenwasserstoffharze und andere. Weiter enthalten übliche Druckfarben erhebliche Mineralölanteile im Grössenbereich von 25–40 Gew.%.

Die oxidativ vernetzenden Alkyde haben insbesondere die Aufgabe die Pigmentbenetzung zu unterstützen. Meist handelt es sich um Phthalatharze (Ortho-, Iso- und Terephthalsäureester) und/oder urethanhaltige Alkydharze. Sie sind aufgebaut aus Dicarbonsäuren und aus mehrwertigen Alkoholen, wie Glycerin, Pentaerythrit, Sorbit, Trimethylolpropan, bzw. aus mehrfunktionellen Isocyanaten einerseits und Ölen, natürlichen oder synthetischen Fettsäuren oder Fettalkoholen andererseits und werden in bekannter Weise hergestellt. Wegen des besseren Pigmentaufnahmevermögens werden im allgemeinen Alkyde niedriger Viskosität bevorzugt, soweit die Konsistenz der fertigen Druckfarbe dies zulässt.

Zur Herstellung der Druckfarbe werden die verschiedenen Harze in Mineralöl bei erhöhten Temperaturen gelöst und dann das Pigment eingebracht. Der mit solch üblichen Druckfarben hergestellte Druckfarbenfilm härtet danach oxidativ aus.

Derartige Druckfarben und die damit hergestellten Drucke zeigen jedoch noch keine voll befriedigenden Eigenschaften. So sollten Verdruckbarkeitseigenschaften noch verbessert werden. Weiter stören bei den bislang bekannten Druckfarben die Kontaktvergilbung und Geruchsbildung der damit hergestellten Druckerzeugnisse. Insbesondere aber ist bei den mit den bislang bekannten Druckfarben hergestellten Druckerzeugnissen die Wiederaufbereitung des Altpapiers ein besonderes Problem. Die Weissgradvergleiche zwischen dem üblichen, speziell bei Naturpapier unterworfenen, unbedruckten und bedruckten Papier lassen dies erkennen.

Aufgabe der vorliegenden Erfindung ist eine Papier-Druckfarbe zur Verfügung zu stellen, welche frei ist von den bekannten Nachteilen der bislang bekannten Druckfarben und den damit hergestellten Druckerzeugnissen, insbesondere gute Verdruckbarkeitseigenschaften und Pigmentbenetzungsfähigkeit aufweist, und zu hochglänzender, abriebfester, von Kontaktvergilbung und Geruchsbildung freien Druckfilmen guter Wiederablösbarkeit führt.

Die gestellte Aufgabe wird erfindungsgemäss gelöst durch solche Druckfarben der eingangs genannten Art, bei denen als Alkydharz ein nichttrocknendes Alkydharz enthalten ist, das unter Verwendung von Ölen, Fettsäuren und/oder Fettalkoholen einer Jodzahl von kleiner als 20, hergestellt ist.

Es sind zwar schon Einbrenn-Lacke für metallische Träger und dergl. bekannt, welche hitzehärtende Harze, wie Melaminharz oder Aminotriazinaldehydharze und nicht-trocknende, mit praktisch gesättigten Ölen bzw. Fettsäuren modifizierte Alkydharze enthalten (JP-OS 5 073 710 und AT-PS 170 017). Dort geht es aber um die Herstellung dreidimensionaler, mit dem Melamin- bzw.

Aminotriazinaldehyd-Harz vernetzter, mit dem Blech festhaftend und nicht-wiederablösbar verbundener Einbrenn-Lacke. Dies hat aber mit Druckfarben für Papier und der dort teilweise völlig entgegengesetzten Problematik, abgesehen davon, dass sie zur Verarbeitung unter ganz anderen Bedingungen bestimmt sind, ersichtlich nichts zu tun.

Erfindungsgemäss können die üblichen Alkydharze, z.B. die vorgenannten Phthalatharze, Glyptale oder auch Urethanalkydharze verwendet werden, soweit sie mit Ölen, Fettsäuren und/oder Fettalkoholen oder Gemischen solcher Stoffe mit der obengenannten Jodzahl modifiziert sind. Als Öl kommt beispielsweise Kokosöl (Jodzahl etwa 9) und Palmkernöl (Jodzahl 10–18) in Betracht. Jodzahlen von ungefähr 10 oder kleiner sind in besonderem Masse bevorzugt. Anstelle oder neben Ölen können die Alkydharze auch mit Fettsäuren, einschliesslich synthetischen Fettsäuren und/oder Fettalkoholen der vorgenannten Jodzahlen modifiziert sein. Die Modifizierungsmittel sollten von Mehrfachdoppelbindungen im allgemeinen weitgehend frei sein. Die im Alkydharz enthaltene Menge an Modifizierungsmittel (Öl, Fettsäure und/oder Fettalkohol) liegt im allgemeinen im Bereich von 40–70 Gew.%, bei Dicarbonsäure- bzw. Isocyanat-Mengen im Bereich von 20–35 Gew.% und bei mehrwertigen Alkoholen im Bereich von 5 bis 15 Gew.%. Beispiele für im Sinne der Erfindung einsetzbare natürliche und synthetische Fettsäuren bzw. Fettalkohole sind Hexansäure, Isooktansäure und andere bzw. deren hydrierte Derivate (Oxoalkohole) (Carstens, Lackrohstofftabellen, 1978, 46; Römpp's Chemie-Lexikon, 2. Aufl. 1103). Als Vorteil hat es sich weiter erwiesen, wenn die in den erfindungsgemässen Druckfarben enthaltenen Alkydharze einer bereinigte Hydroxylzahl (ohne Säurezahl) von grösser als 10, vorzugsweise grösser als 15 aufweisen. Besonders bewährt haben sich Alkydharze mit einer Hydroxylzahl im Bereich von etwa 20 bis etwa 35. Auch die Säurezahl der Alkydharze kann von vorteilhaftem Einfluss sein. So haben sich insbesondere Alkydharze bewährt mit einer Säurezahl von kleiner als ungefähr 25, insbesondere von etwa 6–12.

Entgegen den bisherigen Erfahrungen, wonach zur Verbesserung der Pigmentbenetzungseigenschaften Alkydharze möglichst niedriger Viskosität benutzt werden sollen, können die erfindungsgemäss eingesetzten nicht-trocknenden Alkydharze eine Viskosität im Bereich von 2000 dPa·s (20°C) bis Festharzkonsistenz aufweisen.

Vorteilhafterweise weisen die in den erfindungsgemässen Druckfarben enthaltenen, nichttrocknenden Alkydharze ein Gewichtsmittel des Molekulargewichts ($M_w$) von 9000 bis 30 000, vorzugsweise 12 000 bis 22 000 oder ein Zahlenmittel des Molekulargewichts ($M_n$) von 3000 bis 5000, vorzugsweise 3500 bis 4500 auf. Der Dispersitätsfaktor liegt meist im Bereich von 3 bis 6, vorzugsweise 3,5 bis 5. Die Molekulargewichtsbestimmungen können mittels Gelchromatographie durchgeführt werden. Besonders haben sich solche Alkydharze bewährt, deren Molekulargewicht $M_w$ im Bereich von 14 000 bis 16 000 liegen und deren Molekulargewichte $M_n$ im Bereich von 3500 bis 4000, entsprechend einem Dispersitätsfaktor von ungefähr 4 liegen.

Die erfindungsgemässen Druckfarben weisen speziell beim Grossauflagendruck in Offset-Druckwerken den beachtlichen Vorteil erheblicher Stabilität, z.B. Viskositätsstabilität auf, was u.a. in ausgezeichneter Punktschärfe erkennbar ist. Obwohl die damit hergestellten Druckfilme eine Vernetzung nicht zeigen, sind sie klebfrei und weisen voll befriedigende Haftung, Glanz und Abriebfestigkeit auf. Die bedruckten Bögen besitzen zudem überraschend verbesserte Planlage und verringerte Rollneigung. Weiter sind sie frei von unangenehmem Geruch und gilben nicht nach. Sie sind auch nach längerer Zeit wieder bedruckbar, ohne dass es zu den bekannten Farbannahmestörungen (Abstosseffekt) kommt. Schliesslich bedürfen die erfindungsgemässen Druckfarben auch nicht der Gegenwart ökologisch bedenklicher Schwermetall-Trockenstoffe.

Ein weiterer Gegenstand der Erfindung ist die Verwendung der erfindungsgemässen Druckfarben für Flach-, Hoch- und gegebenenfalls Tiefdruck. Gerade in diesem Bereich zeigen sich die besonderen Vorteile der danach erhältlichen Druckerzeugnisse. Speziell im Etikettendruck ist die verbesserte Laugendurchdringungsfähigkeit von erheblichem Vorteil. Von ganz besonderem Wert ist die weit verbesserte De-inkbarkeit auch länger gelagerter Druckerzeugnisse auf Naturpapier. Worauf die gute Abriebfestigkeit einerseits und die sehr günstige Wiederablösbarkeit andererseits zurückzuführen sind, ist noch nicht geklärt. Durch die erfindungsgemäss eingesetzten, nicht-trocknenden Alkydharze erübrigt sich die Verwendung der bislang erforderlichen trocknenden Alkydharze, trocknenden Öle und Trockenstoffe. Die erfindungsgemässen nicht trocknenden Alkydharze treten also namentlich anstelle der trocknenden Alkydharze und trocknenden Öle. Geringe Anteile an trocknenden Alkydharzen und trocknenden Ölen sind allerdings nicht ausgeschlossen. Werden jedoch grössere Mengen trocknender Alkydharze und trocknender Öle zugesetzt, so gehen die erfindungsgemäss erzielten Vorteile zunehmend unter. Ein besonders bevorzugter Gegenstand im Sinne der Erfindung ist die Verwendung einer Druckfarbe, bestehend aus Pigment, einem nicht-trocknenden Alkydharz, das mit Ölen, Fettsäuren und/oder Fettalkoholen einer Jodzahl von kleiner als 20 modifiziert ist und gegebenenfalls weiteren üblichen Bestandteilen, wie Gleitmitteln, Lösungsmitteln und Viskositätsbeeinflussenden Mitteln zur Herstellung von Papierdrucken mit Recycling-Eigenschaften. Die Druckfarben werden also hierbei zur Herstellung solcher Papierdrucke verwendet, die bestimmt oder mit besonders gutem Erfolg befähigt sind, unter Rückgewinnung des Papiers wieder aufbereitet zu werden. Die bei üblichen De-inking-Verfahren erzielte Wiederablösbarkeit des Drucks führt zu Altpapier hoher Weissgrade.

Auch bei Verwendung der erfindungsgemässen Druckfarben für die Herstellung von Transferpapier für den Thermoumdruck werden beachtliche Vorteile erzielt. In diesem Verwendungsbereich tritt insbesondere keine Farbtonverschiebung während der Lagerung des Transferpapiers ein.

Die nachfolgenden Beispiele dienen der Erläuterung der Erfindung:

Beispiel 1

a) In einem 5 l fassenden Mehrhalskolben ausgestattet mit Rührer, Inertgaseinlassstutzen, Thermometer und Wasserabscheider werden 1800 g Kokosöl, 0,1 g Bleiglätte und 569 g Trimethylolpropan bei 240°C unter Rühren umgeestert. Dann werden 797 g Isophthalsäure, 250 ml Xylol und 7 g p-Toluolsulfonsäure als Veresterungskatalysator zugegeben und die Reaktion unter Rühren bei 245°C bis auf eine Säurezahl von ca. 8 fortgeführt. Insgesamt werden 173 g an Reaktionswasser isoliert, die restliche Menge sowie der Schleppmittelanteil (Xylol) wird bei der nachfolgenden Vakuumdestillation entfernt. Der resultierende Polyester besitzt eine Viskosität von 4.500 dPa·s, eine bereinigte OHZ (ohne SZ) von 25 und eine Säurezahl von 8. Zur besseren Handhabung des Produkts wird der Polyester mit 600 g Mineralöl (Siedebereich 250–280°C; Aromatenanteil 16%; Anilinpunkt 76°C) verdünnt. Die Viskosität liegt dann bei 320 dPa·s/20°C.

b) 10 g eines Benzidin- gelbs (Color-Index Pigment yellow 13) werden zusammen mit 10 g des wie zuvor hergestellten, nicht-trocknenden Alkydharzes, 2 g eines mikronisierten Polyäthylenwachses und 76 g einer Bindemittellösung aus 32 g eines phenolmodifizierten Kolophoniumharzes in 44 g Mineralöl (Siedepunkt 270–310°C; Aromatengehalt 18%; Anilinpunkt 72°C) angerieben (Viskosität der Bindemittellösung 120 dPa·s/20°C).

c) Zu Vergleichszwecken wurde bei sonst identischer Zusammensetzung das nicht-trocknende Alkydharz durch ein handelsübliches trocknendes Alkydharz auf Basis Sojaöl (Isophthalsäure, Trimethylolpropan, 1500 dPa·s, 20°C, Öllänge 61%) ersetzt, wobei zur praxisgerechten Abbindung 2 g Co-Oktoat mit einem Co-Anteil von 6% zugesetzt wurde. Zu Vergleichszwecken erhielt auch die erfindungsgemässe Druckfarbe b) einen entsprechenden Zusatz.

d) Die Farben wurden einem drucktechnischen Vergleich unterzogen und folgende Ergebnisse ermittelt. Die aufgetragene Druckfarbenschicht betrug in allen Fällen 1,5 g/m² ± 5%.

| Eigenschaften | Farbe nach Beispiel 1c (Erfindung) | Farbe nach Beispiel 1c (Stand der Technik) |
|---|---|---|
| Glanz % | 62 | 60 |
| Scheuerfestigkeit | sehr gut | sehr gut |

| Eigenschaften | Farbe nach Beispiel 1c (Erfindung) | Farbe nach Beispiel 1c (Stand der Technik) |
|---|---|---|
| Abbindegeschwindigkeit (Conter-Test) | ca. 60 Sek. | ca. 60 Sek. |
| Geruchsentwicklung während Trocknung | keine | deutlich nach ranzigen Spaltprodukten |
| Geschmacksbeeinflussung an frisch geriebener Schokolade (Robinson-Test) | keine | deutlich |
| Laugendurchdringung | 30 Sek. | 160 Sek. |
| Hautbildung auf Dose und Walzen | keine | nach ca. 4 Std. |
| Vergilbung | keine | stark |

Beispiel 2

a) Analog Beispiel 1b und 1c werden Offsetdruckfarben unter Verwendung nachfolgender Formulierung hergestellt.

b) 20 g Furnace-Russ wurden zusammen mit 2 g mikronisiertem Polyäthylenwachs und 78 g eines Bindemittels bestehend aus 7 g des nach Beispiel 1a hergestellten nicht-trocknenden Alkydharzes, 13 g eines phenolmodifizierten mineralöllöslichen Kolophoniumharzes, 10 g eines Gilsonite Asphalts zusammen mit 48 g Mineralöl (Siedebereich von 240–260°C; Aromatengehalt 16%; Anilinpunkt 77°C) wobei die Bindemittelbestandteile bei 200°C zusammengeschmolzen waren, angerieben. Es resultierte eine gut fliessende und einwandfreie Offset-Druckfarbe.

c) Die dem Stand der Technik entsprechende Vergleichsformulierung enthielt anstelle des nicht-trocknenden Alkydharzes ein trocknendes Isophthalsäurealkydharz bei sonst gleicher Zusammensetzung.

d) Die Farben wurden im Rotationsdruck auf Zeitungsdruckpapier (52 g/m²) gedruckt, die Drucke 5 Tage bei 60°C künstlich gealtert und einem Standard-deinkbarkeitstest unterzogen. Die Weissgradwerte wurden durch Reflektionsmessungen mit TAPPI-Filter Nr. 8 mit dem Elrepho-Photometer bestimmt.

| | Papier unbedruckt | Papier bedruckt nach Beispiel 2b | Papier bedruckt nach Beispiel 2c |
|---|---|---|---|
| Weissgrad % (Elrepho) Reflektionswerte | 58,7 | 58,7 | 47,8 |

Wie die Weissgradvergleiche zeigen, zeigt die erfindungsgemässe Druckfarbe (Beispiel 2b) hervorragende Ablöseeigenschaften, damit keine Beeinträchtigung des Basispapiers, während bei Verwendung einer üblichen Druckfarbe eine deutlich sichtbare Vergrauung eintritt.

Beispiel 3
Zur Herstellung einer Transferdruckfarbe wurden 150 Teile Disperse Red 60 zusammen mit 50 Teilen Dispers Blue 331 und 200 Teilen Alkydharz gemäss Beispiel 1a) zusammen mit 600 Teilen eines Bindemittels bestehend aus 250 Teilen eines phenolmodifizierten Kolophoniumharzes und 350 Teilen Mineralöl (Siedebereich 270–310°C; Aromatengehalt 18%; Anilinpunkt 72°C) auf einem Dreiwalzenstuhl angerieben.

Die resultierende Transferdruckfarbe wurde mit einer Schichtstärke von 1,5 q/m² angedruckt und unmittelbar nach dem Druck, und zunehmender Alterung umgebügelt. Farbtonveränderungen konnten nicht festgestellt werden.

Analog dem vorhergehenden Beispiel wurde das nicht-vernetzende Alkydharz gegen ein Alkyd auf der Basis von Leinöl-Isophthalsäure ausgetauscht. Zu Vergleichszwecken wurden jeweils 10 Teile Cobaltsikkativ zugesetzt. Die Druckprobenpräperation erfolgte ebenfalls analog. Bei den vergleichend durchgeführten Umbügeltesten zeigte sich bereits nach 4stündiger Alterung der Drucke eine deutliche Farbtonverschiebung, welche mit zunehmender Lagerung des Transferpapiers immer stärker wurde.

Beispiel 4
In einen 1 l fassenden Mehrhalskolben ausgestattet mit Rührer, Inertgaseinlassstutzen, Thermometer, Dimrothkühler und Dosiertrichter wurden 287,8 g Kokosölraffinat zusammen mit 0,02 g Bleiglätte und 91 g Trimethylolpropan bei 240°C unter Rühren umgeestert. Anschliessend wurde das Reaktionsprodukt auf Raumtemperatur gekühlt, 168,7 g Isophorondiisocyanat über den Dosiertrichter langsam unter Rühren in Gegenwart von 0,3 g Dibuthylzinndilaurat eingetragen. Die exotherm ablaufende Reaktion wurde solange weitergeführt, bis der titriemetrisch bestimmte NCO-Gehalt kleiner 0,5% war. Der restliche Anteil an Isocyanat wurde durch Zugabe von 2 g Äthanol abgefangen. Das resultierende nichttrocknende Urethanalkyd besass eine Viskosität von 230 000 dPa·s bei 20°C und eine bereinigte OH-Zahl von 40 und eine Säurezahl von 2. Zur besseren Handhabung des Produktes wurden dem Ansatz 235 g Mineralöl (Siedebereich 270–310°C, Aromatengehalt 18%, Anilinpunkt 72°C) zugegeben. Die Viskosität des Produktes lag dann bei 3000 dPa·s bei 20°C.

Vergleichend durchgeführte Druckfarbenanreibungen zeigten ähnliche anwendungstechnische Eigenschaften wie Beispiel nach Farbe 1c.

## Patentansprüche

1. Papier-Druckfarbe, bestehend aus Pigment, einem mit langkettigen Fettsäuren modifiziertem Alkydharz-Bindemittel und gegebenenfalls weiteren üblichen Bestandteilen, wie Gleitmittel, Lösungsmittel und einem Viskositäts-beeinflussenden Mittel, dadurch gekennzeichnet, dass ein Alkydharz enthalten ist, das nicht-trocknend ist, mit Ölen, Fettsäuren und/oder Fettalkoholen einer Jodzahl von kleiner als 20 modifiziert ist und ein Gewichtsmittel des Molekulargewichts ($M_w$) von 9000–30 000, vorzugsweise von 12 000 bis 22 000, aufweist.

2. Druckfarbe gemäss Patentanspruch 1, dadurch gekennzeichnet, dass das Alkydharz durch Kokosöl modifiziert ist.

3. Druckfarbe gemäss Patentanspruch 1 oder 2, dadurch gekennzeichnet, dass das Alkydharz eine OH-Zahl (bereinigt) von grösser als 10, vorzugsweise grösser als 15, insbesondere 20 bis 35, aufweist.

4. Druckfarbe gemäss einem der vorhergehenden Patentansprüche, dadurch gekennzeichnet, dass das Alkydharz eine Viskosität im Bereich von 2000 dPa·s (20°C) bis Festharz-Konsistenz aufweist.

5. Druckfarbe gemäss einem der vorhergehenden Patentansprüche, dadurch gekennzeichnet, dass das Alkydharz eine Säurezahl von kleiner als 25, vorzugsweise 6–12 aufweist.

6. Druckfarbe gemäss einem der vorhergehenden Patentansprüche, dadurch gekennzeichnet, dass das Alkydharz ein Zahlenmittel des Molekulargewichts ($M_n$) 3000–5000, vorzugsweise 3500 bis 4500 hat.

7. Druckfarbe gemäss einem der vorhergehenden Patentansprüche, dadurch gekennzeichnet, dass das Alkydharz einen Dispersitätsfaktor ($M_w/M_n$) 3–6, vorzugsweise 3,5–5 aufweist.

8. Verwendung der Druckfarbe gemäss einem der vorhergehenden Patentansprüche für Flach- oder Hochdruck.

9. Verwendung einer Druckfarbe, bestehend aus Pigment, einem nicht-trocknenden Alkydharz, das mit Ölen, Fettsäuren und/oder Fettalkoholen einer Jodzahl von kleiner als 20 modifiziert ist und ein Gewichtsmittel des Molekulargewichts ($M_w$) von 9000–30 000, vorzugsweise von 12 000 bis 22 000 aufweist sowie gegebenenfalls weiteren üblichen Bestandteilen, wie Gleitmitteln, Lösungsmitteln und viskositätsbeeinflussenden Mitteln zur Herstellung von Papierdrukken mit Recycling-Eigenschaften.

## Claims

1. Paper-printing ink consisting of a pigment, an alkydresin binder modified with long-chain fatty acids and optionally further known components such as lubricants, solvents and a viscosity-influencing agent, characterized in that an alkyd resin is contained which is non-drying, is modified with oils, fatty acids and/or fatty alcohols with an iodine number of less than 20, and has a weightaverage molecular weight ($M_w$) of 9,000 to 30,000, preferably of 12,000 to 22,000.

2. Printing ink according to claim 1, characterized in that the alkyd resin is modified by coconut oil.

3. Printing ink according to claim 1 or 2, characterized in that the alkyd resin has an OH number (adjusted) of more than 10, preferably more than 15, in particular 20 to 35.

4. Printing ink according to one of the preceding claims, characterized in that the alkyd resin has a viscosity ranging from 2000 dPa·s (20°C) to solid resin consistency.

5. Printing ink according to one of the preceding claims, characterized in that the alkyd resin has an acid number of less than 25, preferably 6 to 12.

6. Printing ink according to one of the preceding claims, characterized in that the alkyd resin has a number-average molecular weight ($M_n$) of 3000 to 5000, preferably 3500 to 4500.

7. Printing ink according to one of the preceding claims, characterized in that the alkyd resin has a dispersity factor ($M_w/M_n$) of 3 to 6, preferably 3.5 to 5.

8. Use of the printing ink according to one of the preceding claims for flat printing or relief printing.

9. Use of a printing ink, consisting of pigment, a nondrying alkyd resin which is modified with oils, fatty acids and/or fatty alcohols with an iodine number of less than 20 and has a weightaverage molecular weight ($M_w$) of 9000 to 30,000, preferably 12,000 to 22,000, as well as optionally further known components such as lubricants, solvents and viscosity-influencing agents, for the production of paper prints with recycling properties.

**Revendications**

1. Encre d'imprimerie pour papier, constituée par des pigments, un liant à résine alkyde modifiée par des acides gras à longue chaîne et éventuellement d'autres constituants usuels tels qu'un agent lubrifiant, un solvant et un agent ayant une influence sur la viscosité, caractérisée en ce qu'elle comprend une résine alkyde non siccative, modifiée avec des huiles, des acides gras et/ou des alcools gras ayant un indice d'iode inférieur à 20 et qui présente un poids moléculaire moyen ($M_w$) de 9000 à 30 000 et de préférence de 12 000 à 22 000.

2. Encre d'imprimerie selon la revendication 1, caractérisée en ce que la résine alkyde est modifiée par de l'huile de coco.

3. Encre d'imprimerie selon la revendication 1 ou 2, caractérisée en ce que la résine alkyde a un indice d'OH (corrigé) supérieur à 10, de préference supérieur à 15, et en particulier allant de 20 à 35.

4. Encre d'imprimerie selon l'une quelconque des revendications précédentes, caractérisée en ce que la résine alkyde a une viscosité allant depuis 2000 dPa·s (20°C) jusqu'à la consistance d'une résine solide.

5. Encre d'imprimerie selon l'une quelconque des revendications précédentes, caractérisée en ce que la résine alkyde a un indice d'acide inférieur à 25, de préférence variant de 6 à 12.

6. Encre d'imprimerie selon l'une quelconque des revendications précédentes, caractérisée en ce que la résine alkyde a un poids moléculaire moyen ($M_n$) allant de 3000 à 5000, et de préférence de 3500 à 4500.

7. Encre d'imprimerie selon l'une quelconque des revendications précédentes, caractérisée en ce que la résine alkyde a un indice de dispersité ($M_w/M_n$) de 3 à 6 et de préférence de 3,5 à 5.

8. Utilisation de l'encre d'imprimerie selon l'une quelconque des revendication précédentes pour l'impression à plat ou en relief.

9. Utilisation d'une encre d'imprimerie constituée par des pigments, une résine alkyde non siccative, qui est modifiée par des huiles, des acides gras et/ou des alcools gras ayant un indice d'iode inférieur à 20, et qui possède un poids moléculaire moyen ($M_w$) de 9000 à 30 000, de préférence de 12 000 à 20 000, ainsi qu'éventuellement d'autres constituants usuels tels que des agents lubrifiants, des solvants et des agents ayant une influence sur la viscosité, pour réaliser des imprimés sur papier pouvant être recyclés.